(19) Europäisches Patentamt
European Patent Office
Office européen des brevets

(11) EP 4 219 576 A1

(12) # EUROPÄISCHE PATENTANMELDUNG

(43) Veröffentlichungstag:
**02.08.2023 Patentblatt 2023/31**

(21) Anmeldenummer: **22153913.3**

(22) Anmeldetag: **28.01.2022**

(51) Internationale Patentklassifikation (IPC):
***C08G 18/16*** (2006.01) ***C08G 18/18*** (2006.01)
***C08G 18/32*** (2006.01) ***C08G 18/48*** (2006.01)
***C08G 18/66*** (2006.01) ***C08G 18/79*** (2006.01)

(52) Gemeinsame Patentklassifikation (CPC):
**C08G 18/4833; C08G 18/161; C08G 18/168; C08G 18/1858; C08G 18/3206; C08G 18/6674; C08G 18/792**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **WELSCH, Nicole**
  **Rösrath (DE)**
- **LEVEN, Matthias**
  **Köln (DE)**
- **ALBERS, Reinhard**
  **Leverkusen (DE)**
- **MAYER, Thomas**
  **Leverkusen (DE)**
- **BOEHNKE, Lutz**
  **Overath (DE)**

(74) Vertreter: **Levpat**
**c/o Covestro AG**
**Gebäude K12**
**51365 Leverkusen (DE)**

(54) **HERSTELLUNG VON ALIPHATISCHEN POLYURETHAN-POLYISOCYANURATSCHAUMSTOFFEN (PUR-PIR) UNTER VERWENDUNG EINES KATALYSATORGEMISCHS AUS SALZEN ORGANISCHER CARBONSÄUREN UND 1,1,3,3-TETRAALKYLGUANIDINEN**

(57) Die vorliegende Erfindung betrifft ein Verfahren zur Herstellung von aliphatischen Polyurethan-Polyisocyanuratschaumstoffen (PUR-PIR) unter Verwendung eines speziellen Katalysatorgemischs aus einem Trimerisierungs- und Treibkatalysator sowie die Verwendung dieses Katalysatorgemischs. Die Erfindung betrifft des Weiteren einen Polyurethan-Polyisocyanuratschaumstoff, der nach dem vorgenannten Verfahren hergestellt oder herstellbar ist, sowie dessen Verwendung.

EP 4 219 576 A1

## Beschreibung

Die vorliegende Erfindung betrifft ein Verfahren zur Herstellung von aliphatischen Polyurethan-Polyisocyanuratschaumstoffen (PUR-PIR) unter Verwendung eines speziellen Katalysatorgemischs aus einem Trimeriserungs- und Treibkatalysator sowie die Verwendung dieses Katalysatorgemischs. Die Erfindung betrifft des Weiteren einen Polyurethan-Polyisocyanuratschaumstoff, der nach dem vorgenannten Verfahren hergestellt oder herstellbar ist, sowie dessen Verwendung.

## Stand der Technik

Polyurethan- und Polyisocyanuratschaumstoffe (PUR-PIR) sind an sich bekannt. Diese Schaumstoffe weisen wünschenswerte Eigenschaften im Hinblick auf die Wärmeisolation und das Brandverhalten auf. Aufgrund dieser Eigenschaften werden sie üblicherweise zur Wärmedämmung beziehungsweise für isolierende Verbundelemente, z.B. Metallsandwichelemente, eingesetzt. In EP 2 435 243 B1 ist beispielsweise ein Verfahren zur Herstellung eines solchen Schaumstoff-Verbundelements beschrieben.

Polyurethan- und Polyisocyanuratschaumstoffe auf Basis von aliphatischen Isocyanaten sind von Interesse, da diese über eine hohe Lichttransmission und ein gleichzeitig gutes Isolationsveralten verfügen können. Dadurch können sie als lichtdurchlässige, wärmedämmende Bauelemente eingesetzt werden, wie beispielsweise in WO 2018/177987 A1 beschrieben.

Dem PUR-PIR-Reaktionsgemisch werden in der Regel Katalysatorkomponenten zugesetzt, welche geeignet sind, die Treibreaktion, die Urethanreaktion und / oder die Isocyanuratreaktion (Trimerisierung) zu katalysieren. Häufig werden für beide Reaktionen Amin-basierte Katalysatorsysteme eingesetzt, auch der Einsatz von Salzen organischer Carbonsäuren, insbesondere Kaliumsalzen wie Kaliumacetat, als Trimerisierungskatalysator ist bekannt. Die Herstellung von Polyurethan- und Polyisocyanuratschaumstoffen auf Basis von aliphatischen Isocyanaten stellt jedoch eine Herausforderung dar, da die aliphatischen Isocyanate eine niedrige Reaktivität aufweisen und dadurch der Herstellprozess zeitaufwendig ist. Diese niedrige Reaktivität äußert sich bei Herstellung dieser Schäume beispielsweise darin, dass die so genannte Startzeit der Schaumreaktion langsam abläuft. Es besteht daher ein Bedarf an ein Verfahren zur Herstellung von aliphatischen Polyurethan- und Polyisocyanuratschaumstoffen, das die Reaktionszeit, beispielsweise gemessen als Startzeit, deutlich verkürzt. Gleichzeitig soll durch eine ausgewogene Katalyse der Treib-, Urethan- und Isocyanuratreaktion sichergestellt werden, dass bei der gewünschten Rohdichte ein stabiler Schaumkörper erhalten wird. Beispielsweise kann eine zu starke Treibwirkung zu einem Schaumkollaps führen, während bei einer zu frühen Urethanreaktion die Zellausbildung und damit das Steigverhalten bzw. Aufschäumverhalten der Reaktionsmatrix ungenügend sein kann. Letzteres führt zu relativ kompakten, dichten Schaumkörpern mit niedrigen Steighöhen. Aus diesem Grund sollten die Schäume neben einer verbesserten Startzeit auch möglichst ein gutes Aufschäumverhalten aufweisen. Das Aufschäumverhalten kann beispielsweise über die Zeit freigesetzte Wärme, d.h. die gemessene Reaktionstemperatur und die maximale Schaumendhöhe beurteilt werden. Schäume mit erhöhter Reaktivität, d.h. z.B. kürzerer Startzeit, und gutem Aufschäumverhalten, zeichnen sich durch eine beschleunigte Wärmefreisetzung, d.h. erhöhten maximalen Schaumtemperatur, sowie einer höheren Schaumendhöhe aus.

Die Aufgabe der vorliegenden Erfindung bestand somit darin, ein Verfahren zur Herstellung von aliphatischen Polyurethan-Polyisocyanuratschaumstoffen der eingangs genannten Art mit einer verkürzten Startzeit der Schaumreaktion bereitzustellen. Eine weitere Aufgabe der vorliegenden Erfindung bestand darin, dass diese Schäume vorzugsweise auch ein gutes beziehungsweise verbessertes Aufschäumverhalten aufweisen.

Diese Aufgabe wurde gelöst durch ein Verfahren zur Herstellung von aliphatischen Polyurethan-Polyisocyanuratschaumstoffen (PUR-PIR) durch Umsetzung einer Zusammensetzung umfassend oder bestehend aus den folgenden Komponenten

A) mindestens eine Isocyanat-reaktive Verbindung umfassend wenigstens ein Polyol;

B) mindestens ein aliphatisches oligomeres Polyisocyanat;

C) mindestens ein chemisches und/oder physikalisches Treibmittel;

D) mindestens ein Trimerisierungs-Katalysator D1) und mindestens ein Treibkatalysator D2) ;

E) gegebenenfalls eine oberflächenaktive Verbindung und

F) gegebenenfalls von Komponente E) verschiedene Hilfs- und Zusatzstoffe,

wobei die Umsetzung bei einer Isocyanat-Kennzahl von wenigstens 200 durchgeführt wird, dadurch gekennzeichnet, dass der Trimerisierungs-Katalysator D1) ausgewählt ist aus Salzen organischer Carbonsäuren mit 1 bis 15 Kohlenstoffatomen und der Treibkatalysator D2) ausgewählt ist aus 1,1,3,3-Tetraalkylguanidinen mit der allgemeinen Formel (I)

wobei $R^1$, $R^2$, $R^3$ und $R^4$ unabhängig voneinander für einen linearen oder verzweigten Alkylrest mit 1 bis 12 Kohlenstoffatomen und X für ein Wasserstoffatom oder einen linearen oder verzweigten Alkylrest mit 1 bis 12 Kohlenstoffatomen steht.

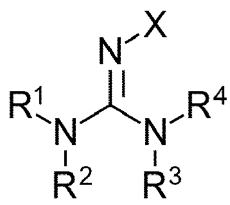
(I)

Des Weiteren wurde die Aufgabe gelöst durch einen aliphatischen Polyurethan-Polyisocyanuratschaumstoff, erhalten oder erhältlich durch das erfindungsgemäße Verfahren.

Außerdem wurde die Aufgabe gelöst durch die Verwendung eines Katalysatorgemischs aus mindestens einem Trimerisierungs-Katalysator D1) und mindestens einem Treibkatalysator D2) zur Herstellung eines aliphatischen Polyurethan-Polyisocyanuratschaumstoffs oder zur Verringerung der Startzeit der Schäumungsreaktion bei der Herstellung von aliphatischen Polyurethan-Polyisocyanuratschaumstoffen, dadurch gekennzeichnet, dass der Trimerisierungs-Katalysator D1) ausgewählt ist aus Salzen organischer Carbonsäuren mit 1 bis 15 Kohlenstoffatomen und der Treibkatalysator D2) ausgewählt ist aus 1,1,3,3-Tetraalkylguanidinen mit der allgemeinen Formel (I)

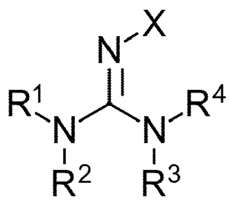
(I)

wobei $R^1$, $R^2$, $R^3$ und $R^4$ unabhängig voneinander für einen linearen oder verzweigten Alkylrest mit 1 bis 12 Kohlenstoffatomen, bevorzugt mit 1 bis 6 Kohlenstoffatomen und X entweder für ein Wasserstoffatom oder einen linearen oder verzweigten Alkylrest mit 1 bis 12 Kohlenstoffatomen steht.

Überraschenderweise wurde gefunden, dass die Startzeit der Schaumreaktion bei der Herstellung von Polyurethan-Polyisocyanuratschaumstoffen durch die Kombination eines Trimerisierungskatalysators ausgewählt aus Salzen organischer Carbonsäuren mit 1 bis 15 Kohlenstoffatomen, insbesondere Kaliummethanoat, Kaliumethanoat, Kalium-2-ethylhexanoat, 1-Ethyl-3-methylimidazoliumethanoat oder Mischungen davon, mit einem Treibkatalysator ausgewählt aus 1,1,3,3-Tetraalkylguanidinen reduziert werden kann. Gleichzeitig führt diese Verwendung erstaunlicherweise zu einer beschleunigten Wärmefreisetzung mit erhöhter maximaler Schaumtemperatur sowie höheren Schaumendhöhe und damit zu einem verbesserten Aufschäumverhalten.

Als Startzeit wird im Rahmen der Erfindung die Zeitspanne verstanden, die vom Start der Vermischung der Komponenten A) und der Komponente B) bis zum sichtbaren Schäumbeginn des Gemisches verstreicht. Der Start des Schäumvorgangs ist durch den Aufstieg oder Farbumschlag der Reaktionsmischung zu erkennen. Der Startvorgang wird durch Beobachtung des Reaktionsgemisches in der Form ermittelt und die Startzeit mittels Stoppuhr gemessen.

Unter der maximalen Schaumtemperatur beziehungsweise maximalen Reaktionstemperatur wird die maximale Temperatur während des Schaumvorgangs verstanden. Diese wird im Rahmen dieser Erfindung während des Schaumvorgangs mithilfe eines Kontakthermometers gemessen, das in das Zentrum des Schaums platziert wird. Die Temperatur wird über einen Zeitraum von 28 min aufgezeichnet. Innerhalb diesen Zeitraums steigt die Temperatur steil an, erreicht ein Maximum und nimmt anschließend wieder stetig ab. Die in diesem Zeitraum gemessene maximale Temperatur entspricht der maximalen Reaktionstemperatur beziehungsweise maximalen Schaumtemperatur.

Unter Schaumendhöhe wird die Höhe des vollständig ausgehärteten Schaumkörpers verstanden. Die Bestimmung der Schaumendhöhe erfolgt dabei an dem vollständig ausgehärteten Schaumkörper ca. 24h nach Herstellung mithilfe eines Maßbands entlang der Aufschäumrichtung. Dazu wird der Schaumkörper im Zentrum durchgeschnitten und die Messung an der höchsten Stelle vorgenommen.

Unter einem Polyurethan- und Polyisocyanuratschaumstoff wird typischerweise ein Schaumstoff verstanden, bei dem die Aushärtung der flüssigen Ausgangsformulierung, enthaltend Isocyanate und Polyole, mit einer Kennzahl von wenigstens 200, bevorzugt von 200 bis 500, besonders bevorzugt von 250 bis 450, ganz besonders bevorzugt von 270 bis 400, zu einem vernetzten Polymer in Schaumform führt. In diesem Kennzahlbereichen besteht gegenüber den isocyanatreaktiven Spezies ein NCO-Überschuss. Die Reaktion der überschüssigen NCO-Gruppen verläuft bevorzugt zu einem großen Teil über eine Trimerisierungsreaktion, wobei überwiegend Polyisocyanurate entstehen. Darüber hinaus können unter anderem durch die Reaktion zwischen den NCO-Gruppen und Polyolen Urethane sowie zwischen NCO-Gruppen und chemischen Treibmitteln wie beispielsweise Wasser Harnstoffe entstehen. Vorzugsweise handelt es sich bei den erfindungsgemäßen Schaumstoffen um Polyurethan- und Polyisocyanurathartschaumstoffe. Die Polyurethan- und Polyisocyanuratschaumstoffe werden insbesondere als Isolationsschaumstoffe, insbesondere in Verbundelementen, welche einen Kern aus dem erfindungsgemäßen Schaumstoff und eine oder zwei Deckschichten enthalten, verwendet.

Ferner betrifft die Erfindung eine Verwendung des erfindungsgemäßen aliphatischen Polyurethan-Polyisocyanuratschaumstoffs als oder zur Herstellung von Isolationsschaumstoffe, insbesondere Verbundelemente, welche einen Kern aus dem Polyurethan-Polyisocyanuratschaumstoff und eine oder zwei Deckschichten enthalten, wobei das Material der Deckschicht bevorzugt Aluminium, Stahl, Bitumen, Papier, Mineral-Vliesstoffe, organische Fasern umfassende Vliesstoffe, Kunststoff-Platten, Kunststoff-Folien und/oder Holzplatten umfasst.

Ein weiterer Gegenstand der Erfindung ist ein Verfahren zur Herstellung eines Schaumstoff-Verbundelements, umfassend die Schritte:

A) Bereitstellen einer Deckschicht; und
B) Auftragen einer erfindungsgemäßen Zusammensetzung als aliphatische Polyurethan-Polyisocyanuratschaumstoffschicht auf die Deckschicht.

**Komponente A):**

Die erfindungsgemäße Zusammensetzung enthält mindestens eine Isocyanat-reaktive Verbindung umfassend wenigstens ein Polyol.

Dieses Polyol ist vorzugsweise ausgewählt aus der Gruppe, umfassend oder bestehend aus Polyetherpolyolen, Polycarbonatpolyolen, Polyethercarbonatpolyolen, Polyesterpolyolen, oder Mischungen von diesen. In einer bevorzugten Ausführungsform umfasst oder besteht das Polyol der Komponente A) aus wenigstens einem Polyetherpolyol.

Das Polyol der Komponente A) weist vorzugsweise eine Hydroxylzahl von 50 bis 1000 mg KOH/g auf, bevorzugt von 100 bis 800 mg KOH/g und besonders bevorzugt von 150 bis 700 mg KOH/g, gemessen nach DIN 53240-1 (Juni 2013).

Bevorzugt weist das Polyol der Komponente A) eine mittlere Funktionalität von > 1, besonders bevorzugt von ≥ 2 auf.

Die im Folgenden beschriebenen Verbindungen können sowohl einzeln als auch in Mischungen als Polyol der Komponente A) eingesetzt werden.

Polyetherpolyole:

Als Polyetherpolyole geeignet sind solche mit einer Hydroxylzahl gemäß DIN 53240-1 (Juni 2013) von ≥ 50 mg KOH/g bis ≤ 1000 mg KOH/g, vorzugsweise von ≥ 100 bis ≤ 800 mg KOH/g und besonders bevorzugt ≥ 150 mg KOH/g bis ≤ 700 mg KOH/g. Die Polyetherpolyole können durch Alkoxylieren von Startermolekülen wie mehrwertigen Alkoholen erhalten werden.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

In einer bevorzugten Ausführungsform der Erfindung liegt der Anteil an Ethylenoxid an der insgesamt eingesetzten Menge an Propylenoxid und Ethylenoxid ≥ 10 und ≤ 100 Gew.-%, bevorzugt ≥ 40 und ≤ 100 Gew.-%. Vorzugsweise ist das Polyetherpolyol "EO-capped", d.h. das Polyetherpolyol besitzt terminale Ethylenoxidgruppen. Die dann endständigen primären Hydroxylgruppen haben eine größere Reaktivität gegenüber Isocyanaten (G. Oertel, Polyurethane Handbook, 2nd Edition, page 194 and 219, (1993)).

Zur Herstellung der Polyetherpolyole werden H-funktionelle Startermoleküle mit einer durchschnittlichen Funktionalität von > 1 bis ≤ 6, bevorzugt von ≥ 1,5 und ≤ 6, besonders bevorzugt ≥ 2 und ≤ 4, ganz besonders bevorzugt ≥ 2 und ≤ 3, verwendet.

Als geeignete H-funktionelle Startsubstanz können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe, umfassend oder bestehend aus Wasser, mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® kommerziell erhältlich von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt. Beispielhaft handelt es sich bei den C1-C24 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Startersubstanzen können auch aus der Substanzklasse der Polyetherpolyole ausgewählt sein, insbesondere solchen mit einem zahlenmittleren Molekulargewicht Mn im Bereich von 100 bis 3000 g/mol, vorzugsweise 150 bis 2000 800 g/mol. Bevorzugt sind Polyetherpolyole, die aus sich wiederholenden Ethylenoxid- und Propylenoxideinheiten aufgebaut sind, bevorzugt mit einem Anteil von 0 bis 90 % Propylenoxideinheiten, besonders bevorzugt mit einem Anteil von 0 bis 60 % Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem zahlenmittleren Molekulargewicht Mn im Bereich von 100 bis 1500 g/mol, vorzugsweise 150 bis 800 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht Mn von 150 bis 1500 g/mol bevorzugt.

Des Weiteren können als H-funktionelle Startersubstanzen Polycarbonatpolyole (wie beispielsweise Polycarbonatdiole) eingesetzt werden, insbesondere solche mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Ebenfalls können Polyethercarbonatpolyole als H-funktionelle Startersubstanzen eingesetzt werden. Insbesondere werden Polyethercarbonatpolyole, die nach dem oben beschriebenen Verfahren hergestellt werden, eingesetzt. Diese als H-funktionelle Startersubstanzen eingesetzten Polyethercarbonatpolyole werden hierzu in einem separaten Reaktionsschritt zuvor hergestellt.

Bevorzugte H-funktionelle Startersubstanzen sind Alkohole der allgemeinen Formel (II),

HO-(CH2)z-OH Formel (II),

wobei z eine Zahl von 1 bis 20, bevorzugt eine gerade Zahl von 2 bis 20 ist. Beispiele für Alkohole gemäß Formel (II) sind Ethylenglycol, 1,4-Butandiol, 1,6-Hexandiol, 1,8-Octandiol, 1,10-Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht Mn im Bereich von 62 bis 4500 g/mol und insbesondere ein zahlenmittleres Molekulargewicht Mn im Bereich von 62 bis 3000 g/mol, ganz besonders bevorzugt ein Molekulargewicht von 62 bis 1500 g/mol. Bevorzugt haben die Polyetherpolyole eine Funktionalität von ≥ 2 bis ≤ 3.

Polycarbonatpolyole:

Als weitere Verbindungsklasse können Polycarbonatpolyole (wie beispielsweise Polycarbonatdiole) eingesetzt werden, insbesondere solche mit einem Molekulargewicht Mn im Bereich von 150 bis 2500 g/mol, vorzugsweise 500 bis 1500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177.

Beispielsweise können als Polycarbonatdiole die Desmophen® C-Typen der Covestro Deutschland AG verwendet werden, wie z. B. Desmophen® C 1100 oder Desmophen® C 2200.

Polyethercarbonatpolyole:

Die als Komponente A) einsetzbaren Polyethercarbonatpolyole weisen vorzugsweise eine Hydroxylzahl (OH-Zahl) gemäß DIN 53240-1 (Juni 2013) von ≥ 50 mg KOH/g bis ≤ 600 mg KOH/g, vorzugsweise von ≥ 100 mg KOH/g bis ≤ 500 mg KOH/g, besonders bevorzugt von ≥ 100 mg KOH/g bis ≤ 300 mg KOH/g auf.

Zur Herstellung der Polyethercarbonatpolyole können die gleichen Alkylenoxide (Epoxide) und die gleichen H-funktionellen Startsubstanzen eingesetzt werden wie weiter oben auch zur Herstellung der Polyetherpolyole beschrieben ist.

Vorzugsweise erfolgt die Copolymerisation von Kohlendioxid und einem oder mehreren Alkylenoxiden in Gegenwart mindestens eines DMC-Katalysators (Doppelmetallcyanid-Katalysators).

Beispielsweise umfasst die Herstellung von Polyethercarbonatpolyolen folgende Schritte, indem:

($\alpha$) eine H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt wird,

($\beta$) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe einer Teilmenge an Alkylenoxid gegebenenfalls in Gegenwart von CO2 erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) ein oder mehrere der Alkylenoxide und Kohlendioxid zu der aus Schritt ($\beta$) resultierenden Mischung zugesetzt werden, wobei die in Schritt ($\gamma$) eingesetzten Alkylenoxide gleich oder verschieden sein können von den bei Schritt ($\beta$) eingesetzten Alkylenoxiden, und wobei sich nach Schritt ($\gamma$) kein weiterer Alkoxylierungsschritt anschließt.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht Mn größer als 500 g/mol enthalten.

Der DMC-Katalysator wird zumeist in einer Menge von $\leq$ 1 Gew. -%, vorzugsweise in einer Menge von $\leq$ 0,5 Gew. -%, besonders bevorzugt in einer Menge von $\leq$ 500 ppm und insbesondere in einer Menge von $\leq$ 300 ppm, jeweils bezogen auf das Gewicht des Polyethercarbonatpolyols eingesetzt.

In einer bevorzugten Ausführungsform der Erfindung weist das Polyethercarbonatpolyol der Komponente A3) einen Gehalt an Carbonatgruppen ("aus Kohlendioxid stammenden Einheiten"), berechnet als $CO_2$, von $\geq$ 2,0 und $\leq$ 30,0 Gew. -%, bevorzugt von $\geq$ 5,0 und $\leq$ 28,0 Gew. -% und besonders bevorzugt von $\geq$ 10,0 und $\leq$ 25,0 Gew. -% auf.

Vorzugsweise weisen die erfindungsgemäß einzusetzenden Polyethercarbonatpolyole zwischen den Carbonatgruppen auch Ethergruppen auf, was in Formel (III) schematisch dargestellt wird. In dem Schema gemäß Formel (III) steht R' für einen organischen Rest wie z.B. einem Alkyl, Alkylaryl oder Aryl-Rest, der jeweils auch Heteroatome wie beispielsweise O, S, Si usw. enthalten kann. Die Indices e und f stehen für eine ganzzahlige Zahl. Das im Schema gemäß Formel (III) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (III) gezeigte Polyethercarbonatpolyol beschränkt ist. In Bezug auf Formel (III) bedeutet dies, dass das Verhältnis von e/f bevorzugt von 2 : 1 bis 1 : 20, besonders bevorzugt von 1,5 : 1 bis 1 : 10 beträgt.

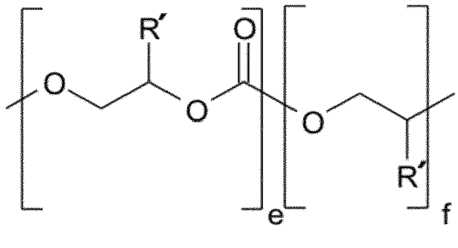

Formel (III)

Der Anteil an eingebautem $CO_2$ ("aus Kohlendioxid stammende Einheiten") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels $^1$H-NMR (ein geeignetes Gerät ist von der Firma Bruker, DPX 400, 400 MHz; Pulsprogramm zg30, Wartezeit d1: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:
Cyclisches Carbonat (welches als Nebenprodukt gebildet wurde) mit einer Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Gewichtsanteil (in Gew.-%) polymer-gebundenen Carbonats (LC') in der Reaktionsmischung wurde nach Formel (IV) berechnet,

$$LC' = \frac{\left[F(5,1-4,8)-F(4,5)\right]*102}{N}*100\% \qquad \text{Formel (IV)}$$

wobei sich der Wert für N ("Nenner" N) nach Formel (V) berechnet:

$$N = \left[F(5,1-4,8)-F(4,5)\right]*102+F(4,5)*102+F(2,4)*58+0,33*F(1,2-1,0)*58+0,25*F(1,6-1,52)*146$$

Formel (V)

Dabei gelten folgende Abkürzungen:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes Propylenoxid
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8-Octandiol (Starter), soweit vorhanden.

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (VI) berechnet,

$$CC' = \frac{F(4,5)*102}{N}*100\% \qquad \text{Formel (VI)}$$

wobei sich der Wert für N nach Formel (V) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid

mittels des Faktors F = 44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

Zur Bestimmung des Anteils an eingebautem $CO_2$ in einem Polyethercarbonatpolyol kann wie zuvor hinsichtlich des Polyethercarbonatpolyol beschrieben vorgegangen werden, wobei das Startermolekül und damit einhergehend die obigen Gleichungen entsprechend anzupassen sind.

Polyethercarbonatpolyole sind beispielsweise unter dem Handelsnamen Cardyon® von der Covestro Deutschland AG kommerziell erhältlich.

Polyesterpolyole:

Bei den ebenfalls als Komponente A) einsetzbaren Polyesterpolyolen handelt es sich insbesondere um solche mit einem zahlenmittleren Molekulargewicht Mn im Bereich von 100 bis 4500 g/mol, vorzugsweise 130 bis 2500 g/mol, besonders bevorzugt von 150 bis 2000 g/mol. Als Polyesterpolyole werden bevorzugt mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Es ist auch möglich als Alkoholkomponente zweiwertige oder mehrwertige Polyetherpolyole einzusetzen. Falls Polyetherpolyole zur Herstellung der Polyesteretherpolyole eingesetzt werden, sind Polyetherpolyole mit einem zahlenmittleren Molekulargewicht Mn von 150 bis 1500 g/mol bevorzugt.

Weitere Verbindungen der Komponente A):

Des Weiteren ist es im Rahmen der Erfindung bevorzugt, dass die Komponente A) zusätzlich mindestens eine niedermolekulare, Isocyanat-reaktive Verbindung mit einer OH- und/oder NH-Funktionalität von mindestens 2 und einer Molmasse kleiner 400 g/mol, bevorzugt von 60 bis 300 g/mol, enthält, wobei diese Verbindung vorzugsweise di- oder trifunktionelle Amine und/oder Alkohole umfasst, bevorzugt ausgewählt aus der Gruppe, umfassend oder bestehend aus Monoethanolamin, Diethanolamin Triethanolamin, Diethylenglykol, Ethylenglykol, 1,2-Propandiol, 1,3-Propandiol, Glycerin, 1,4-Butandiol, 1,6-Hexandiol, 1,1,1-Trimethylolpropan, Pentaerythrit oder Mischungen davon. Ganz besonders bevorzugt wird Ethylenglykol als zusätzliche Isocyanat-reaktive Verbindung der Komponente A) eingesetzt. Diese Verbindungen können als Kettenverlängerer (chain extender) und/oder Vernetzer bzw. Vernetzungsmittel (cross linker) fungieren.

**Komponente B):**

Unter aliphatischen oligomeren Polyisocyanaten sollen im Rahmen der vorliegenden Erfindung Isocyanat-tragende Oligomere B1) und/oder hydrophilierte Isocyanat-tragende Oligomere B2) verstanden werden, die bevorzugt jeweils aus (2n+1) aliphatischen Polyisocyanaten gebildet sind, wobei n eine natürliche Zahl von 1 bis 10 ist. Dementsprechend werden sowohl symmetrische als auch asymmetrische Trimere, einschließlich deren höheren Homologe (wie Pentamere, Heptamere etc.) durch den Begriff "aliphatische oligomere Polyisocyanate" umfasst. Vorzugsweise besteht das aliphatische oligomere Polyisocyanat der Komponente B) zu wenigstens 90 Gew.-% aus diesen Isocyanat-tragenden Oligomeren. Die aliphatischen oligomeren Polyisocyanaten enthalten dabei bevorzugt Isocyanurat- und/oder Iminooxadiazindion-Gruppen.

Bevorzugt werden als Komponente B) Isocyanat-tragende Trimere eingesetzt, wobei die Komponente B) insbesondere eine Mischung aus diesem Trimer und wenigstens einem weiteren Isocyanat-tragenden Oligomer enthält, bei dem n eine natürliche Zahl von 2 bis 10 ist. Vorzugsweise besteht das aliphatische oligomere Polyisocyanat der Komponente B) zu wenigsten 30 Gew.-%, bevorzugt 30 bis 80 Gew.-% aus diesen Isocyanat-tragenden Trimeren.

In einer Ausführungsform werden für das Isocyanat-tragende Oligomer B1) bevorzugt Isocyanat-tragende Trimere der Formel (VII) und/oder Formel (VIII), jeweils gebildet aus 3 aliphatischen Polyisocyanaten, eingesetzt, wobei R unabhängig voneinander eine aliphatische C1 bis C15 Kohlenstoffkette ist.

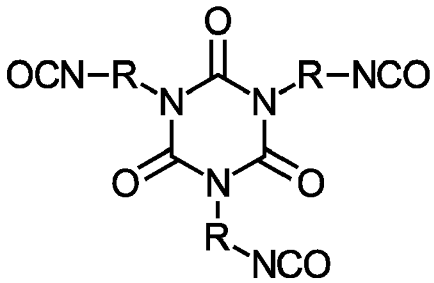

Formel (VII)

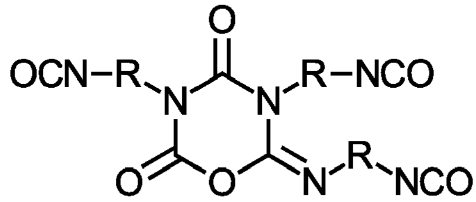

Formel (VIII)

Die aliphatischen oligomeren Polyisocyanate der Komponente B) sind allerdings nicht auf die vorgenannten Formen aus (2n+1) aliphatischen Polyisocyanaten beschränkt. So können beispielsweise auch Dimere sowie deren höheren Homologe unter die Definition der aliphatischen oligomeren Polyisocyanate fallen. Dementsprechend können die aliphatischen oligomeren Polyisocyanate auch Uretdion-, Carbodiimid-, Uretonimin-, Urethan-. Allophanat-, Biuret-, Oxadiazintrion- und/oder Harnstoff-Gruppen enthalten. Auch Mischformen, bei denen mehrere der oben genannten Strukturtypen in einem Oligomer auftreten, fallen unter die Definition.

Zur Herstellung der aliphatischen oligomeren Polyisocyanate können alle dem Fachmann bekannten niedermolekularen monomeren Diisocyanate eingesetzt werden. So sind monomere cyclo- oder linearaliphatische Di- und/oder Polyisocyanate als Ausgangsisocyanate geeignet, die einzeln oder in beliebigen Abmischungen eingesetzt werden können. Typische Beispiele sind 1,4-Diisocyanatobutan, 1,5-Diisocyanatopentan (PDI), 1,6-Diisocyanatohexan (HDI), 2-Methyl-1,5 diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan, 1-Isocyanato-1-methyl-4(3)-isocyanatomethylcyclohexan (IMCI), Bis-(isocyanatomethyl)-norbornan, Triisocyanate und/oder höherfunktionelle Isocyanate wie z. B. 4-Isocyanatomethyl-1,8-octandiisocyanat (Nonantriisocyanat), 1,6,11-Undecantriisocyanat, 1,3,5-Tris(6-isocyanatopentyl)-1,3,5-triazinan-2,4,6-trion oder beliebige Gemische solcher Isocyanatverbindungen. Insbesondere werden die aliphatischen oligomeren Polyisocyanate aus einem Diisocyanat mit 1 bis 15 Kohlenstoffatomen hergestellt. Vorzugsweise ist das Diisocyanat ausgewählt aus 1,5-Pentamethylen-Diisocyanat und/oder 1,6-HexamethylenDiisocyanat. Geeignete kommerziell erhältliche Polyisocyanate sind unter anderem Desmodur® ultra N3300, Desmodur® ultra N3600, Desmodur® N3200, Desmodur® eco N7300 und Desmodur® N3900 (erhältlich bei der Covestro Deutschland AG).

In einer bevorzugten Ausführungsform werden zur Kompatibilisierung, insbesondere in Gegenwart polarer, chemischer Treibmittel wie Wasser und/oder Ameisensäure, hydrophilierte Isocyanat-tragende Oligomere B2) eingesetzt. Covestro Deutschland AG bietet solche Verbindungen kommerziell unter dem Namen Bayhydur® für den Einsatz als Vernetzer in der Lackindustrie an. Hydrophilierte Isocyanate können beispielsweise durch Umsetzung mit in Unterschuss zugegebenen, polaren isocyanatreaktiven Komponenten erhalten werden. Insbesondere ist das kommerziell erhältliche hydrophilierte Isocyanat Bayhydur® 3100 mit einem NCO-Gehalt von 17,4 Gew.-%, einer mittleren NCO-Funktionalität von 3,2 (nach GPC), einem Gehalt an monomerem HDI von maximal 0,1 Gew.-%, einer Viskosität (23°C) von 2800 mPas geeignet und ein Beispiel für ein hydrophiles Isocyanuratgruppen-haltiges Polyisocyanat auf Basis von 1,6-Diisocyanatohexan (HDI). Andere hydrophile Isocyanatgruppen-haltige Polyisocyanate anderer Hersteller kommen hier ebenfalls in Betracht. Ebenso ist eine *in situ* Herstellung von hydrophilierten Isocyanaten vor oder während der Schäumungsreaktion durch Zusatz geeigneter mono- oder polyfunktioneller hydrophiler Isocyanat-reaktiver Verbindungen wie z.B. Polyether, Polyester und Sulfonsäuregruppen-tragende Verbindungen und anderer dem Fachmann bekannten Verbindungen möglich.

In einer bevorzugten Ausführungsform enthält die Komponente B) 80 bis 100 Gew.-%, bevorzugt 85 bis 100 Gew.-% des Isocyanat-tragenden Oligomers B1) und/oder 0 bis 20 Gew.-%, bevorzugt 0 bis 15 Gew.-% des hydrophilierten Isocyanat-tragenden Oligomers B2), bezogen auf das Gesamtgewicht der Komponente B).

Die Komponente B) weist vorzugsweise eine mittlere NCO-Funktionalität pro Molekül von ≥ 2,0, bevorzugt von 2,3 bis 4,3, besonders bevorzugt von 2,5 bis 4,2, ganz besonders bevorzugt von 2,8 bis 4,1 und am meisten bevorzugt von 3,0 bis 4,0 auf. Die NCO-Funktionalität bezieht sich auf freie NCO-Gruppen und nicht auf latente NCO-Gruppen (wie beispielsweise die den Ring der Trimere bildenden NCO-Gruppen). Die mittlere NCO-Funktionalität der Komponente B) wird, sofern nicht anders beschrieben, mittels Gelpermeationschromatographie (GPC) bestimmt. Die Funktionalität ist ein Ausdruck für die Zahl der reaktiven Gruppen pro Molekül, das heißt für die Zahl der potentiellen Verknüpfungsstellen bei der Ausbildung eines Netzwerkes. Polyisocyanate, wie sie zum Beispiel bei der Trimerisierung von Diisocyanaten gebildet werden, bestehen jedoch nicht nur aus einer definierten Molekülsorte, sondern enthalten eine breite Verteilung unterschiedlicher Moleküle mit unterschiedlichen Funktionalitäten. Als Bestimmungsgröße für die Polyisocyanate wird

daher die mittlere Funktionalität angegeben. Die mittlere Funktionalität von Polyisocyanaten ist durch das Verhältnis von zahlenmittlerem Molekulargewicht und Äquivalentgewicht eindeutig bestimmt und wird im Allgemeinen aus der mit Hilfe der Gelpermeationschromatographie ermittelten Molekulargewichtsverteilung berechnet. Da bei der Oligomerisierung von Di- und Polyisocyanaten in der Regel keine reinen Produkte, sondern Verbindungen mit unterschiedlichen Oligomerisierungsgraden, d.h. Oligomerenmischungen entstehen, lässt sich die NCO-Funktionalität der entstandenen Verbindungen lediglich als Durchschnittswert und der Gehalt an NCO-Gruppen nur in Bezug auf das Gesamtgewicht der entstandenen Oligomerenmischung angeben. Eine solche Oligomerenmischung wird im Rahmen der vorliegenden Erfindung vereinfacht als ein "aliphatisches oligomeres Polyisocyanat" bezeichnet.

Des Weiteren ist es bevorzugt, wenn die Komponente B) einen Gehalt an freien NCO-Gruppen von 10,0 bis 40,0 Gew.-%, besonders bevorzugt von 12,0 bis 35,0 Gew.-% und ganz besonders bevorzugt von 15,0 bis 30,0 Gew.-%, bezogen auf das Gesamtgewicht der Komponente B), aufweist, bestimmt gemäß DIN EN ISO 11909:2007.

In einer Ausführungsform des erfindungsgemäßen Verfahrens beträgt die Isocyanat-Kennzahl ≥ 200, bevorzugt von 200 bis 500, besonders bevorzugt von 250 bis 450, am meisten bevorzugt von 270 bis 400. Unter der Isocyanat-Kennzahl (auch Kennzahl, NCO/OH-Index oder Isocyanat-Index genannt) wird der Quotient aus der tatsächlich eingesetzten Stoffmenge [mol] an Isocyanat-Gruppen und der tatsächlich eingesetzten Stoffmenge [mol] an Isocyanatreaktiven Gruppen, multipliziert mit 100, verstanden. Mit anderen Worten gibt die Kennzahl das prozentuale Verhältnis der tatsächlich eingesetzten Isocyanat-Menge zur stöchiometrischen, d.h. für die Umsetzung der OH-Äquivalente berechnete Isocyanat-Menge an. Eine äquivalente Menge an NCO-Gruppen und NCO-reaktiven H-Atomen entspricht dabei einem NCO/OH-Index von 100.

$$\text{Kennzahl} = [(\text{mol Isocyanat-Gruppen}) / (\text{mol Isocyanat-reaktive Gruppen})] * 100$$

Weiterhin ist es bevorzugt, dass die Zusammensetzung einen Gehalt an monomeren Diisocyanaten von < 1,0 Gew.-%, besonders bevorzugt von < 0,5 Gew.-%, ganz besonders bevorzugt von < 0,4 Gew.-% und am meisten bevorzugt von < 0,3 Gew.-%, bezogen auf das Gesamtgewicht der Zusammensetzung, aufweist, bestimmt mittels Flüssigchromatographie mit Massenspektrometrie-Kopplung nach DIN EN ISO 17025.

**Komponente C):**

Als Komponente C) werden mindestens ein chemisches und/oder ein physikalisches Treibmittel eingesetzt. Chemische Treibmittel sind dem Fachmann auf dem Gebiet der Schaumstoffe bekannt. Chemische Treibmittel sind beispielsweise Wasser, Carbonsäure und deren Gemische. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Vorzugsweise wird Wasser als chemisches Treibmittel eingesetzt. Physikalische Treibmittel sind beispielsweise niedrig siedende organische Verbindungen, wie z.B. Kohlenwasserstoffe, Ether, Ketone, Carbonsäureester oder Kohlensäureester. Geeignet sind insbesondere organische Verbindungen, welche gegenüber der Isocyanatkomponente B inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat. Auch bevorzugt ist der Einsatz von (hydro)fluorierten Olefinen, wie z. B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

In einer bevorzugten Ausführungsform wird Wasser als Komponente C) eingesetzt.

**Komponente D):**

Als Komponente D) wird mindestens ein Trimerisierungs-Katalysator D1) und mindestens ein Treibkatalysator D2) eingesetzt. Trimerisierungs-Katalysatoren sind Isocyanuratgruppenbildende Katalysatoren, d.h. Verbindungen, die vor allem die Trimersisierungsreaktion der überschüssigen NCO-Gruppen untereinander beschleunigen. Unter Treibkatalysatoren werden Verbindungen verstanden, die vorrangig die Reaktion zwischen den reaktiven Wasserstoffatomen des chemischen Treibmittels und den Isocyanat-Gruppen unter Ausbildung des Treibgases katalysieren.

Der Trimerisierungs-Katalysator D1) ist ausgewählt aus Salzen organischer Carbonsäuren mit 1 bis 15 Kohlenstoffatomen. Vorzugsweise besteht der Trimerisierungs-Katalysator D1) aus Ammonium- oder Alkalimetallsalzen organischer Carbonsäuren mit 1 bis 15 Kohlenstoffatomen, bevorzugt aus Kaliummethanoat, Kaliumethanoat, Kalium-2-ethylhexanoat, 1-Ethyl-3-methylimidazoliumethanoat oder Mischungen davon.

Der Treibkatalysator D2 ist ausgewählt aus 1,1,3,3-Tetraalkylguandinen mit der allgemeinen Formel (I)

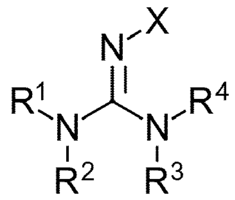

(I)

wobei $R^1$, $R^2$, $R^3$ und $R^4$ unabhängig voneinander für einen linearen oder verzweigten Alkylrest mit 1 bis 12 Kohlenstoffatomen und X für ein Wasserstoffatom oder einen linearen oder verzweigten Alkylrest mit 1 bis 12 Kohlenstoffatomen steht.

In einer bevorzugten Ausführungsform stehen die Reste $R^1$, $R^2$, $R^3$ und $R^4$ aus der Formel (I) unabhängig voneinander für einen linearen oder verzweigten Alkylrest mit 1 bis 6 Kohlenstoffatomen. Die Reste $R^1$, $R^2$, $R^3$ und $R^4$ können beispielsweise Methyl-, Ethyl-, n-Propyl, iso-Propyl, n-Butyl-, iso-Butyl und/oder tert.-Butyl-Reste sein. In einer weiteren bevorzugten Ausführungsform sind die Reste $R^1$, $R^2$, $R^3$ und $R^4$ aus der Formel (I) identisch. Der Treibkatalysator D2) umfasst oder besteht vorzugsweise aus 1,1,3,3-Tetramethylguanidin, 2-tert.-Butyl-1,1,3,3 -tetramethylguanidin, 2-Hexyl-1,1,3,3-tetramethylguanidin, 2-Dodecyl-1,1,3,3-tetramethylguanidin oder Mischungen davon, bevorzugt 1,1,3,3-Tetramethylguanidin und/oder 2-tert.-Butyl-1,1,3,3-tetramethylguanidin.

Ferner ist es im Rahmen der Erfindung bevorzugt, dass die Komponente D) 10,0 bis 65,0 Gew.-Teile, bevorzugt 15,0 bis 60,0 Gew.-Teile von D1) und/oder 35,0 bis 90,0 Gew.-Teile, bevorzugt 40,0 bis 85,0 Gew.-Teile von D2) aufweist, bezogen auf die Summe der gesamte Komponente D).

Zusätzlich zu den Katalysatoren D1) und D2) können noch weitere Katalysatoren eingesetzt werden. Es können bekannte Katalysatoren, beispielsweise tertiäre Amine, wie Triethylamin, Tributylamin, Dimethylbenzylamin, Dicyclohexylmethylamin, Dimethylcyclohexylamin, 2,4,6-Tris(dimethylaminomethyl)phenol, Bis[(dimethylamino)-methyl]phenol, N,N,N',N',N",N"-Hexamethyl-1,3,5-triazin-1,3,5(2H,4H,6H)-tripropanamin oder Mischungen von diesen, eingesetzt werden. Diese Verbindungen können beispielsweise als Urethan-gruppen bildende oder mäßige Trimerisierungs-Katalysatoren wirken.

**Komponente E):**

Des Weiteren können oberflächenaktive Substanzen bei der Herstellung der Schaumstoffe eingesetzt werden, welche zur Unterstützung der Homogenisierung der Ausgangsstoffe dienen und gegebenenfalls auch geeignet sind, die Zellstruktur der Kunststoffe zu regulieren sowie die Schaummatrix zu stabilisieren. Insbesondere kommen Silikontenside und stärker bevorzugt Siloxan-Polyoxyalkylen-Copolymeren und Polydimethylsiloxan-Polyoxyalkylen-Copolymeren in Betracht. Andere oberflächenaktive Zusatzstoffe, Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure können ebenfalls eingesetzt werden.

**Komponente F):**

Optionale von Komponente E) verschiedene Hilfs- und Zusatzstoffe wie Reaktionsverzögerer (beispielsweise sauer reagierende Stoffe wie Salzsäure oder organische Säurehalogenide), Zellregler (beispielsweise Paraffine oder Fettalkohole oder Dimethylpolysiloxane), Pigmente, Farbstoffe, Flammschutzmittel, weitere Stabilisatoren gegen Alterungs- und Witterungseinflüsse, Antioxidantien, Weichmacher, fungistatisch und bakteriostatisch wirkende Substanzen, Füllstoffe (wie beispielsweise Bariumsulfat, Kieselgur, Ruß- oder Schlämmkreide) und Trennmittel können ebenfalls eingesetzt werden. Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben. Die Komponente E) umfasst bevorzugt Flammschutzmittel wie Phosphate, z. B. Triethylphosphat (TEP), Triphenylphosphat (TPP), Trikresylphosphat, Diphenylkresyl-phosphat (DPK), tert-Butylphenyldiphenylphosphat, Resorcinyldiphenylphosphat (auch als Oligomer) und Bisphenol-A-bis(diphenylphosphat) (auch

als Oligomer), und Phosphonate, z.B. Diethylethylphosphonat (DEEP), Dimethylpropylphosphonat (DMPP), Diethanolamino-methylphosphon¬säure¬diethylester, Veriquel® R100 bzw. "E06-16" von der Fa. ICL, und auch gemischte Phosphonate wie Ethylbutylhydroxymethylphosphonat sowie Phosphinate wie 9,10-Dihydro-9-oxa-10-phosphorylphenanthrene-10-oxid (DOPO), Salze der Diphenylphosphinigen Säure und Salze der Diethylphosphinigen Säure Et2PO2H (Exolit® OP 1235, Exolit® OP 935, Exolit® OP 935, Exolit® OP L 1030). Weitere geeignete Flammschutzmittel A5 sind beispielsweise bromierte Ester, bromierte Ether (Ixol) oder bromierte Alkohole wie Dibromneopentylakohol, Tribromneopentylalkohol, Tetrabromphthalat Diol, sowie chlorierte Phosphate wie Tris(2-chlorethyl)phosphat, Tris-(2-chlorpropyl)phosphat (TCPP), Tris(1,3-dichlorpropyl)phosphat, Tris-(2,3-dibrompropyl)phosphat, Tetrakis-(2-chlorethyl)-ethylendiphosphat, sowie handelsübliche halogenhaltige Flammschutzpolyole. Um bestimmte Eigenschaftsprofile (Viskosität, Druckfestigkeit, Offenzelligkeit, Sprödigkeit, Brennbarkeit, Halogengehalt etc.) zu erzielen, kann es auch günstig sein, unterschiedliche Flammschutzmittel miteinander zu kombinieren.

**Ausführungsformen:**

Die vorliegende Erfindung betrifft insbesondere die folgenden Ausführungsformen:
Nach einer ersten Ausführungsform betrifft die Erfindung ein Verfahren zur Herstellung von aliphatischen Polyurethan-Polyisocyanuratschaumstoffen (PUR-PIR) durch Umsetzung einer Zusammensetzung umfassend oder bestehend aus den folgenden Komponenten

A) mindestens eine Isocyanat-reaktive Verbindung umfassend wenigstens ein Polyol;

B) mindestens ein aliphatisches oligomeres Polyisocyanat;

C) mindestens ein chemisches und/oder physikalisches Treibmittel;

D) mindestens ein Trimerisierungs-Katalysator D1) und mindestens ein Treibkatalysator D2) ;

E) gegebenenfalls eine oberflächenaktive Verbindung und

F) gegebenenfalls von Komponente E) verschiedene Hilfs- und Zusatzstoffe,

wobei die Umsetzung bei einer Isocyanat-Kennzahl von wenigstens 200 durchgeführt wird, dadurch gekennzeichnet, dass der Trimerisierungs-Katalysator D1) ausgewählt ist aus Salzen organischer Carbonsäuren mit 1 bis 15 Kohlenstoffatomen und der Treibkatalysator D2) ausgewählt ist aus 1,1,3,3-Tetraalkylguanidinen mit der allgemeinen Formel (I)

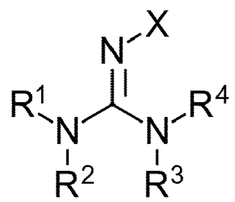

(I)

wobei $R^1$, $R^2$, $R^3$ und $R^4$ unabhängig voneinander für einen linearen oder verzweigten Alkylrest mit 1 bis 12 Kohlenstoffatomen und X für ein Wasserstoffatom oder einen linearen oder verzweigten Alkylrest mit 1 bis 12 Kohlenstoffatomen steht.

Nach einer zweiten Ausführungsform betrifft die Erfindung ein Verfahren nach Ausführungsform 1, dadurch gekennzeichnet, dass das Polyol der Komponente A) ausgewählt ist aus der Gruppe, umfassend oder bestehend aus Polyetherpolyolen, Polycarbonatpolyolen, Polyethercarbonatpolyolen, Polyesterpolyolen, oder Mischungen von diesen, wobei das Polyol der Komponente A) bevorzugt wenigstens ein Polyetherpolyol umfasst oder daraus besteht.

Nach einer dritten Ausführungsform betrifft die Erfindung ein Verfahren nach Ausführungsform 1 oder 2, dadurch gekennzeichnet, dass das Polyol der Komponente A) eine Hydroxylzahl von 50 bis 1000 mg KOH/g aufweist, vorzugsweise von 100 bis 800 mg KOH/g und besonders bevorzugt von 150 bis 700 mg KOH/g, gemessen nach DIN 53240-1 (Juni 2013).

Nach einer vierten Ausführungsform betrifft die Erfindung ein Verfahren nach einem der vorstehenden Ausführungsformen, dadurch gekennzeichnet, dass die Komponente A) zusätzlich mindestens eine Isocyanat-reaktive Verbindung mit einer OH- und/oder NH-Funktionalität von mindestens 2 und einer Molmasse von 400 g/mol oder weniger, bevorzugt von 60 bis 300 g/mol, enthält, wobei diese Verbindung vorzugsweise di- und/oder trifunktionelle Amine

und/oder Alkohole umfasst, bevorzugt ausgewählt aus der Gruppe, umfassend oder bestehend aus Monoethanolamin, Diethanolamin Triethanolamin, Diethylenglykol, Ethylenglykol, 1,2-Propandiol, 1,3-Propandiol, Glycerin, 1,4-Butandiol, 1,6-Hexandiol, 1,1,1-Trimethylolpropan, Pentaerythrit oder Mischungen davon.

Nach einer fünften Ausführungsform betrifft die Erfindung ein Verfahren nach einem der vorstehenden Ausführungsformen, dadurch gekennzeichnet, dass das aliphatische oligomere Polyisocyanat der Komponente B)

B1) Isocyanat-tragende Oligomere, und/oder

B2) hydrophilierte Isocyanat-tragende Oligomere

umfasst oder daraus besteht, jeweils gebildet aus (2n+1) aliphatischen Polyisocyanaten, wobei n eine natürliche Zahl von 1 bis 10 ist.

Nach einer sechsten Ausführungsform betrifft die Erfindung ein Verfahren nach Ausführungsform 5, dadurch gekennzeichnet, dass das Isocyanat-tragende Oligomer B1) und/oder das hydrophilierte Isocyanat-tragende Oligomer B2) ein Isocyanat-tragendes Trimer, jeweils gebildet aus 3 aliphatischen Polyisocyanaten, umfasst, wobei das jeweilige Oligomer zu wenigstens 30,0 Gew.%, bevorzugt von 30,0 Gew.-% bis 80,0 Gew.-% aus diesen Isocyanat-tragenden Trimeren besteht.

Nach einer siebten Ausführungsform betrifft die Erfindung ein Verfahren nach Ausführungsform 5 oder 6, dadurch gekennzeichnet, dass die Komponente B)

- 80,0 bis 100,0 Gew.-%, bevorzugt 85,0 bis 100,0 Gew.-% des Isocyanat-tragenden Oligomers B1) und/oder
- 0 bis 20,0 Gew.-%, bevorzugt 0 bis 15,0 Gew.-% des hydrophilierten Isocyanat-tragenden Oligomers B2)

enthält, bezogen auf das Gesamtgewicht der Komponente B).

Nach einer achten Ausführungsform betrifft die Erfindung ein Verfahren nach einem der vorstehenden Ausführungsformen, dadurch gekennzeichnet, dass das aliphatische oligomere Polyisocyanat der Komponente B) Isocyanurat- und/oder Iminooxadiazindion-Gruppen enthält.

Nach einer neunten Ausführungsform betrifft die Erfindung ein Verfahren nach einem der vorstehenden Ausführungsformen, dadurch gekennzeichnet, dass die Komponente B) eine mittlere NCO-Funktionalität pro Molekül von ≥ 2,0, bevorzugt von 2,3 bis 4,3, besonders bevorzugt von 2,5 bis 4,2, ganz besonders bevorzugt von 2,8 bis 4,1 und am meisten bevorzugt von 3,0 bis 4,0 aufweist.

Nach einer zehnten Ausführungsform betrifft die Erfindung ein Verfahren nach einem der vorstehenden Ausführungsformen, dadurch gekennzeichnet, dass die Komponente B) einen Gehalt an freien NCO-Gruppen von 10,0 bis 40,0 Gew.-%, besonders bevorzugt von 12,0 bis 35,0 Gew.-% und ganz besonders bevorzugt von 15,0 bis 30,0 Gew.-%, bezogen auf das Gesamtgewicht der Komponente B), aufweist, bestimmt gemäß DIN EN ISO 11909:2007.

Nach einer elften Ausführungsform betrifft die Erfindung ein Verfahren nach einem der vorstehenden Ausführungsformen, dadurch gekennzeichnet, dass der Trimerisierungs-Katalysator D1) ein Ammonium- oder Alkalimetallsalz organischer Carbonsäuren mit 1 bis 15 Kohlenstoffatomen umfasst oder daraus besteht, bevorzugt Kaliummethanoat, Kaliumethanoat, Kalium-2-ethylhexanoat, 1-Ethyl-3-methylimidazoliumethanoat oder Mischungen davon.

Nach einer zwölften Ausführungsform betrifft die Erfindung ein Verfahren nach einem der vorstehenden Ausführungsformen, dadurch gekennzeichnet, dass die Reste $R^1$, $R^2$, $R^3$ und $R^4$ aus der Formel (I) unabhängig voneinander für einen linearen oder verzweigten Alkylrest mit 1 bis 6 Kohlenstoffatomen stehen.

Nach einer dreizehnten Ausführungsform betrifft die Erfindung ein Verfahren nach einem der vorstehenden Ausführungsformen, dadurch gekennzeichnet, dass die Reste $R^1$, $R^2$, $R^3$ und $R^4$ aus der Formel (I) identisch sind.

Nach einer vierzehnten Ausführungsform betrifft die Erfindung ein Verfahren nach einem der vorstehenden Ausführungsformen, dadurch gekennzeichnet, dass der Treibkatalysator D2) 1,1,3,3-Tetramethylguanidin, 2-tert.-Butyl-1,1,3,3-tetramethylguanidin, 2-Hexyl-1,1,3,3-tetramethylguanidin, 2-Dodecyl-1,1,3,3-tetramethylguanidin oder Mischungen davon umfasst oder daraus besteht, bevorzugt 1,1,3,3-Tetramethylguanidin und/oder 2-tert.-Butyl-1,1,3,3-tetramethylguanidin.

Nach einer fünfzehnten Ausführungsform betrifft die Erfindung ein Verfahren nach einem der vorstehenden Ausführungsformen, dadurch gekennzeichnet, dass die Zusammensetzung

- 1,0 bis 25,0 Gew.-%, bevorzugt 1,5 bis 20,0 Gew.-% der Komponente A)
- 46,5 bis 97,8 Gew.-%, bevorzugt 58,5 bis 96,5 Gew.-% der Komponente B)
- 0,2 bis 1,5 Gew.-%, bevorzugt 0,3 bis 1,0 Gew.-% der Komponente C)
- 1,0 bis 5,0 Gew.-%, bevorzugt 1,5 bis 4,0 Gew.-% der Komponente D)
- 0 bis 2,0 Gew.-Teile, bevorzugt 0,2 bis 1,5 Gew.-% der Komponente E)
- 0 bis 20,0 Gew.-%, bevorzugt 0 bis 15,0 Gew.-% der Komponente F)

enthält, bezogen auf 100 Gew.-%, die sich ergeben aus der Summe der Komponenten A) bis F).

Nach einer sechszehnten Ausführungsform betrifft die Erfindung ein Verfahren nach einem der vorstehenden Ausführungsformen, dadurch gekennzeichnet, dass die Komponente D)

- 10,0 bis 65,0 Gew.-%, bevorzugt 15,0 bis 60,0 Gew.-% von D1) und/oder
- 35,0 bis 90,0 Gew.-%, bevorzugt 40,0 bis 85,0 Gew.-% von D2)

aufweist, bezogen auf die Summer der gesamten Komponente D.

Nach einer siebzehnten Ausführungsform betrifft die Erfindung ein Verfahren nach einem der vorstehenden Ausführungsformen, dadurch gekennzeichnet, dass die Zusammensetzung einen Gehalt an monomeren Diisocyanaten von < 1,0 Gew.-%, bevorzugt von < 0,5 Gew.-%, besonders bevorzugt von < 0,4 Gew.-% und am meisten bevorzugt von < 0,3 Gew.-%, bezogen auf das Gesamtgewicht der Zusammensetzung, aufweist, bestimmt mittels Flüssigchromatographie mit Massenspektrometrie-Kopplung nach DIN EN ISO 17025.

Nach einer achtzehnten Ausführungsform betrifft die Erfindung ein Verfahren nach einem der vorstehenden Ausführungsformen, dadurch gekennzeichnet, dass die Umsetzung bei einer Isocyanat-Kennzahl von 200 bis 500 erfolgt, bevorzugt von 250 bis 450, besonders bevorzugt von 270 bis 400.

Nach einer neunzehnten Ausführungsform betrifft die Erfindung ein Verfahren nach einem der vorstehenden Ausführungsformen, dadurch gekennzeichnet, dass die Startzeit der Schäumungsreaktion ≤ 100,0 s beträgt, bevorzugt ≤ 80,0 s, besonders bevorzugt ≤ 65,0 s, ganz besonders bevorzugt von 5,0 bis 60,0 s, bestimmt nach der in der Beschreibung angegebenen Methode.

Nach einer zwanzigsten Ausführungsform betrifft die Erfindung einen aliphatischen Polyurethan-Polyisocyanuratschaumstoff, erhalten oder erhältlich durch ein Verfahren nach einem der Ausführungsformen 1 bis 19.

Nach einer einundzwanzigsten Ausführungsform betrifft die Erfindung die Verwendung eines aliphatischen Polyurethan-Polyisocyanuratschaumstoffs nach Ausführungsform 20 als oder zur Herstellung von Isolationsschaumstoffe, insbesondere Verbundelemente, welche einen Kern aus dem Polyurethan-Polyisocyanuratschaumstoff und eine oder zwei Deckschichten enthalten, wobei das Material der Deckschicht bevorzugt Aluminium, Stahl, Bitumen, Papier, Mineral-Vliesstoffe, organische Fasern umfassende Vliesstoffe, Kunststoff-Platten, Kunststoff-Folien und/oder Holzplatten umfasst.

Nach einer zweiundzwanzigsten Ausführungsform betrifft die Erfindung die Verwendung eines Katalysatorgemischs aus mindestens einem Trimerisierungs-Katalysator D1) und mindestens einem Treibkatalysator D2) zur Herstellung eines aliphatischen Polyurethan-Polyisocyanuratschaumstoffs oder zur Verringerung der Startzeit der Schäumungsreaktion bei der Herstellung von aliphatischen Polyurethan-Polyisocyanuratschaumstoffen, dadurch gekennzeichnet, dass der Trimerisierungs-Katalysator D1) ausgewählt ist aus Salzen organischer Carbonsäuren mit 1 bis 15 Kohlenstoffatomen und der Treibkatalysator D2) ausgewählt ist aus 1,1,3,3-Tetraalkylguanidinen mit der allgemeinen Formel (I)

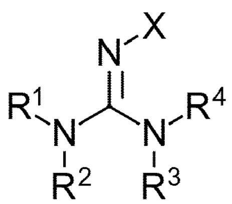

(I)

wobei $R^1$, $R^2$, $R^3$ und $R^4$ unabhängig voneinander für einen linearen oder verzweigten Alkylrest mit 1 bis 12 Kohlenstoffatomen, bevorzugt mit 1 bis 6 Kohlenstoffatomen und X entweder für ein Wasserstoffatom oder einen linearen oder verzweigten Alkylrest mit 1 bis 12 Kohlenstoffatomen steht.

Nach einer dreiundzwanzigsten Ausführungsform betrifft die Erfindung ein Verfahren zur Herstellung eines Schaumstoff-Verbundelements, umfassend die Schritte:

A) Bereitstellen einer Deckschicht; und

B) Auftragen einer wie in den Ausführungsformen 1 bis 19 definierten Zusammensetzung als aliphatische Polyurethan-Polyisocyanuratschaumstoffschicht auf die Deckschicht.

**Beispiele und Vergleichsbeispiele:**

Die vorliegende Erfindung wird im Folgenden anhand von Beispielen erörtert, ist jedoch nicht auf diese beschränkt.

Verwendete Komponenten:

Verwendete Komponenten A1):

- Desmophen® 1990 (Polyetherpolyol der Fa. Covestro Deutschland AG auf Basis von Trimethylolpropan und Ethylenoxid, OH-Zahl: 550 mg KOH/g)

Verwendete Komponenten A2):

- Ethylenglykol

Verwendete Komponente B1):

- Desmodur® N3600 (Isocyanuratgruppen-haltiges aliphatisches Polyisocyanat der Fa. Covestro Deutschland AG auf Basis von 1,6-Diisocyanatohexan (HDI) mit einem NCO-Gehalt von 23,2 Gew.-%, einer mittleren NCO-Funktionalität von 3,2 (nach GPC), einem Gehalt an monomerem HDI von maximal 0,2 Gew.-% und einer Viskosität von 1200 mPa·s (23 °C, bestimmt nach DIN EN ISO 3219/A.3))

Verwendete Komponente B2):

- Bayhydur® 3100 (Hydrophiles Isocyanuratgruppen-haltiges Polyisocyanat auf Basis von 1,6-Diisocyanatohexan (HDI) mit einem NCO-Gehalt von 17,4 Gew.-%, einer mittleren NCO-Funktionalität von 3,2 (nach GPC), einem Gehalt an monomerem HDI von maximal 0,1 Gew.-% und einer Viskosität von 2800 mPas (23 °C, DIN EN ISO 3219/A.3))

Verwendete Komponente C):

- Wasser

Verwendete Komponenten D1.1):

- Kaliummethanoat (36 Gew.-% in Monoethylenglykol)

Verwendete Komponenten D1.2):

- Kaliumethanoat (12,75 Gew.-%) und Kalium-2-ethylhexanoat (24,75 Gew.-%) in Diethylenglykol/Monoethylenglykol (73:27)

Verwendete Komponenten D1.3):

- Kalium-2-ethylhexanoat (49,5 Gew.-%) in Diethylenglykol/N-Methylpyrrolidon (66,9:33,1)

Verwendete Komponenten D2.1):

- 1,1,3,3-Tetramethylguanidin (Firma Sigma-Aldrich)

Verwendete Komponenten D2.2)

- 2-tert.-Butyl-1,1,3,3-tetramethylguanidin (Firma Sigma-Aldrich)

Verwendete Komponenten E):

- Tegostab® B8490 (Polyetherpolysiloxancopolymerisat, Firma Evonik Industries AG)

Verwendete Komponenten F):

- TCPP (Tris(1-chloro-2-propyl)-phosphat, Firma Lanxess GmbH)

Weitere Katalysatoren:

- Dabco® TMR-30 (2,4,6-Tris(dimethylaminomethyl)phenol und Bis[(dimethylamino)-methyl]phenol, Firma Evonik Industries AG)
- Niax® E-A-1 (Bis(2-Dimethylaminoethyl)ether, Firma Momentive)
- Desmorapid® PV (Pentamethyldiethylmethylentriamin, Firma Covestro Deutschland AG)

Verwendete Messverfahren:

- Bestimmung der Startzeit:
  Die Startzeit entspricht der Zeitspanne, die vom Start der Vermischung der Komponenten A) und der Komponente B) bis zum sichtbaren Schäumbeginn des Gemisches verstreicht. Der Start des Schäumvorgangs ist durch den Aufstieg oder Farbumschlag der Reaktionsmischung zu erkennen. Der Startvorgang wird durch Beobachtung des Reaktionsgemisches in der Form ermittelt und die Startzeit mittels Stoppuhr gemessen.
- Maximale Reaktionstemperatur (beziehungsweise maximale Schaumtemperatur): Die Reaktionstemperatur während des Schaumvorgangs wird mithilfe eines Kontakthermometers gemessen, das in das Zentrum des Schaums platziert wird. Die Temperatur wird über einen Zeitraum von 28 min aufgezeichnet. Innerhalb diesen Zeitraums steigt die Temperatur steil an, erreicht ein Maximum und nimmt anschließend wieder stetig ab. Die in diesem Zeitraum gemessene maximale Temperatur entspricht der maximalen Reaktionstemperatur.
- Schaumendhöhe: Die Bestimmung der Schaumendhöhe erfolgt an dem vollständig ausgehärteten Schaumkörper ca. 24h nach Herstellung mithilfe eines Maßbands entlang der Aufschäumrichtung. Dazu wird der Schaumkörper im Zentrum durchgeschnitten und die Messung an der höchsten Stelle vorgenommen.

Herstellung der Schaumstoffe:

Alle Schäume werden mittels Handvermischung im Labormaßstab in einer bei 60 °C temperierten Form mit 4,84 L Füllvolumen hergestellt. Das entgaste Isocyanat wird bei Raumtemperatur in einem Speedmixer vorgelegt. Das Polyol (Komponente A)), das Treibmittel (Komponente C)), die oberflächenaktive Verbindung (Komponente E)) und der Hilfs- und Zusatzstoff (Komponente F)) werden in einem flügellosen Rührblatt bei Raumtemperatur vermischt, um die Menge an eingerührter Luft möglichst gering zu halten. Die entsprechende Mischung wird auf eine Spritze gezogen und in einem Schuss in den Behälter mit dem entgasten Isocyanat eingespritzt. Die Reaktionsmischung wird in dem Speedmixer für 10 Sekunden bei 2000 U/min vermischt. Anschließend wir die Reaktionsmischung in die temperierte Form überführt. Nach einer Formstandzeit von 20 Minuten werden die Schäume für 2 Stunden in einem Heizschrank bei 70 °C nachtemperiert.

**Tabelle 1**

| Komponenten, Reaktionseigenschaften | Einheit | Bsp. 1 | Bsp.2 | Bsp. 3 | Bsp. 4* | Bsp. 5* | Bsp. 6* | Bsp. 7* | Bsp. 8 | Bsp. 9 |
|---|---|---|---|---|---|---|---|---|---|---|
| A1) | [Tle] | 15 | 15 | 15 | 15 | 15 | 15 | 15 | 15 | 15 |
| A2) | [Tle] | 5,47 | 5,47 | 5,47 | 5,47 | 5,47 | 5,47 | 5,47 | 5,47 | 5,47 |
| F) | [Tle] | 80 | 80 | 80 | 80 | 80 | 80 | 80 | 80 | 80 |
| C) | [Tle] | 4,37 | 4,37 | 4,37 | 4,37 | 4,37 | 4,37 | 4,37 | 4,37 | 4,37 |
| E) | [Tle] | 3,5 | 3,5 | 3,5 | 3,5 | 3,5 | 3,5 | 3,5 | 3,5 | 3,5 |
| D1.1) | [Tle] | 10 | | | 10 | 10 | 10 | 10 | 10 | 10 |
| D1.2) | [Tle] | | 10 | | | | | | | |
| D1.3) | [Tle] | | | 10 | | | | | | |
| Dabco® TMR-30 | [Tle] | | | | | | | | 5 | 5 |
| D2.1) | [Tle] | 10 | 10 | 10 | | | | | 8 | |
| D2.2) | [Tle] | | | | | | | | | 11,9 |
| Niax® E-A-1 | [Tle] | | | | 19,74 | 10 | | | | |
| Desmorapid® PV | [Tle] | | | | | | 14,94 | 10 | | |
| Isocyanat-Kennzahl | | 300 | 300 | 300 | 300 | 300 | 300 | 300 | 300 | 300 |
| *Einsatzmengen:* | | | | | | | | | | |
| Polyol | [g] | 46,5 | 45,6 | 51,4 | 46 | 44,5 | 48,3 | 46,5 | 58,4 | 60,1 |
| B1) / B2) (9:1) | [g] | 200 | 200 | 200 | 200 | 200 | 200 | 200 | 250 | 250 |
| Startzeit | [s] | 57 | 55 | 48 | 100 | 110 | 90 | 105 | 63 | 9 |
| max. Reaktionstemp. | [°C] | 96,9 | 91,4 | 89,7 | 76,5 | 71,6 | 79 | 75,1 | 121 | n.d.[a] |
| Schaumendhöhe | [cm] | 6,5 | 7,5 | 7,5 | 3,4 | 2,0 | 4,8 | 4,2 | 9,8 | n.d.[a] |

* nicht erfindungsgemäß; "Aufschäumen bereits während des Mischvorgangs; [Tle] = Gewichtsteile

Es wurde überraschenderweise gefunden, dass der Einsatz von 1,1,3,3-Tetraalkylguanidinen im Vergleich zu bekannten Blaskatalysatoren die Startzeit der Schäumreaktion deutlich verkürzt. So wurden in den Beispielen 1 bis 3, in denen 1,1,3,3-Tetramethylguanidin zum Einsatz kam, Startzeiten zwischen 48 und 57 Sekunden gemessen. In den Vergleichsbeispielen 4 und 6 wurde 1,1,3,3-Tetramethylguanidin äquimolar durch Niax E-A-1 oder Desmorapid PV ersetzt, wohingegen in den Vergleichsbeispielen 5 und 7 die gleichen Massenanteile von Niax E-A-1 bzw. Desmorapid PV wie 1,1,3,3-Tetramethylguanidin verwendet wurden. In diesen Beispielen wurden Startzeiten in einem Bereich zwischen 90 und 110 Sekunden ermittelt. Als weitere Verbindung der Gruppe von Tetraalkylguanidinen wurde 2-tert.-Butyl-1,1,3,3-tetramethylguanidin eingesetzt (Beispiele 8 und 9). Auch hier wurden analoge Stoffmengen bzw. der gleiche Massenanteil an 2-tert.-Butyl-1,1,3,3-tetramethylguanidin wie 1,1,3,3-Tetramethylguanidin verwendet und Startzeiten zwischen 9 und 63 Sekunden erhalten.

Weiterhin zeigen die durchgeführten Versuche, dass die Verwendung von 1,1,3,3-Tetraalkylguanidinen eine beschleunigte Wärmefreisetzung und ein verbessertes Aufschäumverhalten zur Folge hat. Dies äußert sich in einer höheren maximalen Reaktionstemperatur in den Beispielen 1 bis 3 und 8 zwischen 89,7 und 121 °C und einer höheren Schaumendhöhe in einem Bereich zwischen 6,5 und 9,8 cm.

## Patentansprüche

1. Verfahren zur Herstellung von aliphatischen Polyurethan-Polyisocyanuratschaumstoffen (PUR-PIR) durch Umsetzung einer Zusammensetzung umfassend oder bestehend aus den folgenden Komponenten

   A) mindestens eine Isocyanat-reaktive Verbindung umfassend wenigstens ein Polyol;
   B) mindestens ein aliphatisches oligomeres Polyisocyanat;
   C) mindestens ein chemisches und/oder physikalisches Treibmittel;
   D) mindestens ein Trimerisierungs-Katalysator D1) und mindestens ein Treibkatalysator D2) ;
   E) gegebenenfalls eine oberflächenaktive Verbindung und
   F) gegebenenfalls von Komponente E) verschiedene Hilfs- und Zusatzstoffe,
   wobei die Umsetzung bei einer Isocyanat-Kennzahl von wenigstens 200 durchgeführt wird,
   **dadurch gekennzeichnet, dass**
   der Trimerisierungs-Katalysator D1) ausgewählt ist aus Salzen organischer Carbonsäuren mit 1 bis 15 Kohlenstoffatomen und der Treibkatalysator D2) ausgewählt ist aus 1,1,3,3-Tetraalkylguanidinen mit der allgemeinen Formel (I)

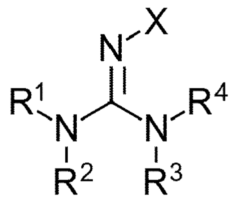

(I)

   wobei
   $R^1$, $R^2$, $R^3$ und $R^4$ unabhängig voneinander für einen linearen oder verzweigten Alkylrest mit 1 bis 12 Kohlenstoffatomen und
   X für ein Wasserstoffatom oder einen linearen oder verzweigten Alkylrest mit 1 bis 12 Kohlenstoffatomen steht.

2. Verfahren nach Anspruch 1, **dadurch gekennzeichnet, dass** das Polyol der Komponente A) ausgewählt ist aus der Gruppe, umfassend oder bestehend aus Polyetherpolyolen, Polycarbonatpolyolen, Polyethercarbonatpolyolen, Polyesterpolyolen, oder Mischungen von diesen, wobei das Polyol der Komponente A) bevorzugt wenigstens ein Polyetherpolyol umfasst oder daraus besteht und/oder, dass das Polyol der Komponente A) eine Hydroxylzahl von 50 bis 1000 mg KOH/g aufweist, vorzugsweise von 100 bis 800 mg KOH/g und besonders bevorzugt von 150 bis 700 mg KOH/g, gemessen nach DIN 53240-1 (Juni 2013).

3. Verfahren nach Anspruch 1 oder 2, **dadurch gekennzeichnet, dass** das aliphatische oligomere Polyisocyanat der Komponente B)

   B1) Isocyanat-tragende Oligomere, und/oder

B2) hydrophilierte Isocyanat-tragende Oligomere

umfasst oder daraus besteht, jeweils gebildet aus (2n+1) aliphatischen Polyisocyanaten, wobei n eine natürliche Zahl von 1 bis 10 ist.

**4.** Verfahren nach Anspruch 3, **dadurch gekennzeichnet, dass** das Isocyanat-tragende Oligomer B1) und/oder das hydrophilierte Isocyanat-tragende Oligomer B2) ein Isocyanat-tragendes Trimer, jeweils gebildet aus 3 aliphatischen Polyisocyanaten, umfasst, wobei das jeweilige Oligomer zu wenigstens 30,0 Gew.%, bevorzugt von 30,0 Gew.-% bis 80,0 Gew.-% aus diesen Isocyanat-tragenden Trimeren besteht.

**5.** Verfahren nach Anspruch 3 oder 4, **dadurch gekennzeichnet, dass** die Komponente B)

• 80,0 bis 100,0 Gew.-%, bevorzugt 85,0 bis 100,0 Gew.-% des Isocyanat-tragenden Oligomers B1) und/oder
• 0 bis 20,0 Gew.-%, bevorzugt 0 bis 15,0 Gew.-% des hydrophilierten Isocyanat-tragenden Oligomers B2)

enthält, bezogen auf das Gesamtgewicht der Komponente B).

**6.** Verfahren nach einem der vorstehenden Ansprüche, **dadurch gekennzeichnet, dass** die Komponente B) eine mittlere NCO-Funktionalität pro Molekül von ≥ 2,0, bevorzugt von 2,3 bis 4,3, besonders bevorzugt von 2,5 bis 4,2, ganz besonders bevorzugt von 2,8 bis 4,1 und am meisten bevorzugt von 3,0 bis 4,0 aufweist und/oder, dass die Komponente B) einen Gehalt an freien NCO-Gruppen von 10,0 bis 40,0 Gew.-%, besonders bevorzugt von 12,0 bis 35,0 Gew.-% und ganz besonders bevorzugt von 15,0 bis 30,0 Gew.-%, bezogen auf das Gesamtgewicht der Komponente B), aufweist, bestimmt gemäß DIN EN ISO 11909:2007.

**7.** Verfahren nach einem der vorstehenden Ansprüche, **dadurch gekennzeichnet, dass** der Trimerisierungs-Katalysator D1) ein Ammonium- oder Alkalimetallsalz organischer Carbonsäuren mit 1 bis 15 Kohlenstoffatomen umfasst oder daraus besteht, bevorzugt Kaliummethanoat, Kaliumethanoat, Kalium-2-ethylhexanoat, 1-Ethyl-3-methylimidazoliumethanoat oder Mischungen davon.

**8.** Verfahren nach einem der vorstehenden Ansprüche, **dadurch gekennzeichnet, dass** die Reste $R^1$, $R^2$, $R^3$ und $R^4$ aus der Formel (I) unabhängig voneinander für einen linearen oder verzweigten Alkylrest mit 1 bis 6 Kohlenstoffatomen stehen und/oder, dass die Reste $R^1$, $R^2$, $R^3$ und $R^4$ aus der Formel (I) identisch sind.

**9.** Verfahren nach einem der vorstehenden Ansprüche, **dadurch gekennzeichnet, dass** der Treibkatalysator D2) 1,1,3,3-Tetramethylguanidin, 2-tert.-Butyl-1,1,3,3-tetramethylguanidin, 2-Hexyl-1,1,3,3 -tetramethylguanidin, 2-Dodecyl-1,1,3,3-tetramethylguanidin oder Mischungen davon umfasst oder daraus besteht, bevorzugt 1,1,3,3-Tetramethylguanidin und/oder 2-tert.-Butyl-1,1,3,3-tetramethylguanidin.

**10.** Verfahren nach einem der vorstehenden Ansprüche, **dadurch gekennzeichnet, dass** die Zusammensetzung

• 1,0 bis 25,0 Gew.-%, bevorzugt 1,5 bis 20,0 Gew.-% der Komponente A)
• 46,5 bis 97,8 Gew.-%, bevorzugt 58,5 bis 96,5 Gew.-% der Komponente B)
• 0,2 bis 1,5 Gew.-%, bevorzugt 0,3 bis 1,0 Gew.-% der Komponente C)
• 1,0 bis 5,0 Gew.-%, bevorzugt 1,5 bis 4,0 Gew.-% der Komponente D)
• 0 bis 2,0 Gew.-Teile, bevorzugt 0,2 bis 1,5 Gew.-% der Komponente E)
• 0 bis 20,0 Gew.-%, bevorzugt 0 bis 15,0 Gew.-% der Komponente F)

enthält, bezogen auf 100 Gew.-%, die sich ergeben aus der Summe der Komponenten A) bis F).

**11.** Verfahren nach einem der vorstehenden Ansprüche, **dadurch gekennzeichnet, dass** die Komponente D)

• 10,0 bis 65,0 Gew.-%, bevorzugt 15,0 bis 60,0 Gew.-% von D1) und/oder
• 35,0 bis 90,0 Gew.-%, bevorzugt 40,0 bis 85,0 Gew.-% von D2) aufweist, bezogen auf die Summer der gesamten Komponente D.

**12.** Verfahren nach einem der vorstehenden Ansprüche, **dadurch gekennzeichnet, dass** die Startzeit der Schäumungsreaktion ≤ 100,0 s beträgt, bevorzugt ≤ 80,0 s, besonders bevorzugt ≤ 65,0 s, ganz besonders bevorzugt von 5,0 bis 60,0 s, bestimmt nach der in der Beschreibung angegebenen Methode.

**13.** Aliphatischer Polyurethan-Polyisocyanuratschaumstoff, erhalten oder erhältlich durch ein Verfahren nach einem der Ansprüche 1 bis 12.

**14.** Verwendung eines aliphatischen Polyurethan-Polyisocyanuratschaumstoffs nach Anspruch 13 als oder zur Herstellung von Isolationsschaumstoffe, insbesondere Verbundelemente, welche einen Kern aus dem Polyurethan-Polyisocyanuratschaumstoff und eine oder zwei Deckschichten enthalten, wobei das Material der Deckschicht bevorzugt Aluminium, Stahl, Bitumen, Papier, Mineral-Vliesstoffe, organische Fasern umfassende Vliesstoffe, Kunststoff-Platten, Kunststoff-Folien und/oder Holzplatten umfasst.

**15.** Verwendung eines Katalysatorgemischs aus mindestens einem Trimerisierungs-Katalysator D1) und mindestens einem Treibkatalysator D2) zur Herstellung eines aliphatischen Polyurethan-Polyisocyanuratschaumstoffs oder zur Verringerung der Startzeit der Schäumungsreaktion bei der Herstellung von aliphatischen Polyurethan-Polyisocyanuratschaumstoffen, **dadurch gekennzeichnet, dass** der Trimerisierungs-Katalysator D1) ausgewählt ist aus Salzen organischer Carbonsäuren mit 1 bis 15 Kohlenstoffatomen und der Treibkatalysator D2) ausgewählt ist aus 1,1,3,3-Tetraalkylguanidinen mit der allgemeinen Formel (I)

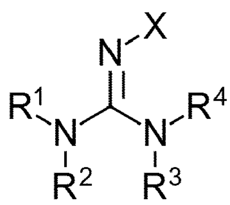

(I)

wobei

$R^1$, $R^2$, $R^3$ und $R^4$ unabhängig voneinander für einen linearen oder verzweigten Alkylrest mit 1 bis 12 Kohlenstoffatomen, bevorzugt mit 1 bis 6 Kohlenstoffatomen und
X entweder für ein Wasserstoffatom oder einen linearen oder verzweigten Alkylrest mit 1 bis 12 Kohlenstoffatomen
steht.

Europäisches Patentamt
European Patent Office
Office européen des brevets

# EUROPÄISCHER RECHERCHENBERICHT

Nummer der Anmeldung
EP 22 15 3913

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/380753 A1 (BÖHNKE LUTZ [DE] ET AL) 9. Dezember 2021 (2021-12-09) * Absatz [0139]; Ansprüche 16-30; Beispiele 1-6 * ----- | 1-15 | INV. C08G18/16 C08G18/18 C08G18/32 C08G18/48 C08G18/66 C08G18/79 |
| A | WO 2018/177987 A1 (COVESTRO DEUTSCHLAND AG [DE]) 4. Oktober 2018 (2018-10-04) * Ansprüche 1-14 * ----- | 1-15 | |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| München | 30. Juni 2022 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 15 3913

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-06-2022

| Im Recherchenbericht angeführtes Patentdokument | Datum der Veröffentlichung | Mitglied(er) der Patentfamilie | Datum der Veröffentlichung |
|---|---|---|---|
| US 2021380753 A1 | 09-12-2021 | CN 112839975 A | 25-05-2021 |
| | | EP 3632947 A1 | 08-04-2020 |
| | | EP 3861043 A1 | 11-08-2021 |
| | | US 2021380753 A1 | 09-12-2021 |
| | | WO 2020070140 A1 | 09-04-2020 |
| WO 2018177987 A1 | 04-10-2018 | CN 110431164 A | 08-11-2019 |
| | | EP 3601403 A1 | 05-02-2020 |
| | | US 2022049044 A1 | 17-02-2022 |
| | | WO 2018177987 A1 | 04-10-2018 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2435243 B1
- WO 2018177987 A1
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP 0000389 A


### In der Beschreibung aufgeführte Nicht-Patentliteratur


- **G. OERTEL.** *Polyurethane Handbook,* 1993, 194, , 219
- **G. OERTEL ; CARL-HANSER-VERLAG.** *Kunststoff-Handbuch,* 1993, vol. VII, 104-127